# EUROPEAN PATENT APPLICATION

(11) **EP 4 783 629 A1**
(43) Date of publication of application: **29.07.2026**
(21) Application number: 23953715.2
(22) Date of filing: 28.09.2023
(51) Int. Cl.: H04W 8/14

(54) **TASK MANAGEMENT METHOD, COMMUNICATION APPARATUS, AND COMMUNICATION SYSTEM**

(71) Applicant: HUAWEI TECHNOLOGIES CO., LTD., Shenzhen, Guangdong 518129 (CN)
(72) Inventor: HUANG, Huanhuan, Shenzhen, Guangdong 518129 (CN); PENG, Chenghui, Shenzhen, Guangdong 518129 (CN)
(74) Representative: Thun, Clemens
(86) International application number: PCT/CN2023/122736
(87) International publication number: WO 2025/065568

(57) **Abstract**

Embodiments of this application provide a task management method, a communication apparatus, and a communication system. In the method, a first terminal device may execute a first task before switching when connecting to a second access network device, and establish an association between a first tunnel for the first task and the first terminal device after switching to a first access network device, so that the first terminal device can continue to execute the first task, and exchange data of the first task with another task executor, thereby ensuring continuity of task data and task execution efficiency.

## Description

### TECHNICAL FIELD

This application relates to the field of communication technologies, and in particular, to a task management method, a communication apparatus, and a communication system.

### BACKGROUND

With development of communication technologies, a network needs to have a capability to support new services like artificial intelligence (artificial intelligence, AI). To support the new services, the network needs to efficiently collaborate and schedule various heterogeneous resources (such as computational power, data, and models). Therefore, a process of achieving a specific objective through collaboration of multi-dimensional resources is described as a "task".

To enable controllable execution of tasks in the network, specific logical functions are needed, including a task anchor (task anchor, TA), a task executor (task executor, TE), and the like. The TA is responsible for lifecycle management of the task, including task deployment, initiation, deletion, modification, monitoring, and the like. The TE is responsible for specific execution of the task and performing data exchange in a service-logic level. The TA receives a task request and deploys the task to one or more TEs for execution. A network element in a core network may serve as a task executor, and a terminal device may also serve as a task executor.

In a scenario in which the terminal device serves as a task executor, after the terminal device accesses an access network device, the access network device may associate the terminal device with one or more tasks, so that the terminal device can execute the task, and the terminal device can exchange task data with another task executor that executes a same task.

Due to mobility of the terminal device, how the terminal device exchanges the task data with another task executor after the terminal device switches between access network devices, to ensure task execution efficiency needs to be resolved.

### SUMMARY

Embodiments of this application provide a task management method, a communication apparatus, and a communication system, to ensure task execution efficiency.

According to a first aspect, an embodiment of this application provides a task management method. The method may be performed by a task control function network element or a module (for example, a chip) used in the task control function network element. The method includes: receiving a first message, where the first message includes identification information of a first terminal device and identification information of a first access network device; and sending, based on the first message, first indication information to the first access network device and sending second indication information to a second access network device, where the first indication information indicates to establish an association between a first tunnel for a first task and the first terminal device, and the first tunnel is a tunnel between a task forwarding function network element and the first access network device; the second indication information indicates to delete an association between a second tunnel for the first task and the first terminal device, or indicates to delete the second tunnel for the first task, and the second tunnel is a tunnel between the task forwarding function network element and the second access network device; and the first access network device is a target access network device, and the second access network device is a source access network device.

According to the foregoing solution, the first terminal device may execute the first task before switching when connecting to the second access network device, and establish the association between the first tunnel for the first task and the first terminal device after switching to the first access network device, so that the first terminal device can continue to execute the first task, and exchange data of the first task with another task executor, thereby ensuring continuity of task data and task execution efficiency.

In a possible implementation method, the method further includes: sending the first indication information and the second indication information to the task forwarding function network element based on the first message.

According to the foregoing solution, the first indication information and the second indication information are sent to the task forwarding function network element, so that the task forwarding function network element establishes the association between the first tunnel for the first task and the first terminal device based on the first indication information, and deletes, based on the second indication information, the association between the second tunnel for the first task and the first terminal device or deletes the second tunnel for the first task, to ensure that the first terminal device can correctly execute the first task.

In a possible implementation method, the method further includes: determining whether the first tunnel has been established between the task forwarding function network element and the first access network device; and establishing the first tunnel if the first tunnel has not been established.

In a possible implementation method, the method further includes: sending first policy information to the first access network device, where the first policy information indicates at least one of the following policies:
policy 1: forwarding, via the task forwarding function network element, data that is of the first task and that needs to be sent by the first terminal device to a task processing function network element;
policy 2: forwarding, via the task forwarding function network element or the second access network device, data that is of the first task and that needs to be sent by the first terminal device to a second terminal device, where the second terminal device is served by the second access network device;
policy 3: sending, through an air interface, data that is of the first task and that needs to be sent by the first terminal device to a third terminal device, where the third terminal device is served by the first access network device; and
policy 4: sending, through an air interface, data that is of the first task and that needs to be sent to the first terminal device.

According to the foregoing solution, the first policy information is sent to the first access network device. This can ensure that the data of the first task can be correctly exchanged between the first terminal device and another task executor, to ensure execution efficiency of the first task.

In a possible implementation method, the method further includes: sending second policy information to the second access network device, where the second policy information indicates to forward, via the task forwarding function network element or the first access network device, data that is of the first task and that needs to be sent by the second terminal device to the first terminal device, and the second terminal device is served by the second access network device.

According to the foregoing solution, the second policy information is sent to the second access network device. This can ensure that the data of the first task can be correctly exchanged between the first terminal device and another task executor, to ensure execution efficiency of the first task.

In a possible implementation method, the method further includes: sending third policy information to the task forwarding function network element, where the third policy information indicates to forward, via the first access network device, data that is of the first task and that needs to be sent to the first terminal device.

According to the foregoing solution, the third policy information is sent to the task forwarding function network element. This can ensure that the data of the first task can be correctly exchanged between the first terminal device and another task executor, to ensure execution efficiency of the first task.

According to a second aspect, an embodiment of this application provides a task management method. The method may be performed by a first access network device or a module (for example, a chip) used in the first access network device. The method includes: receiving first indication information from a task control function network element, where the first indication information indicates to establish an association between a first tunnel for a first task and the first terminal device, and the first tunnel is a tunnel between a task forwarding function network element and a first access network device; and establishing the association between the first tunnel and the first terminal device based on the first indication information.

In a possible implementation method, the method further includes: receiving first policy information from the task control function network element, where the first policy information indicates at least one of the following policies:
policy 1: forwarding, via the task forwarding function network element, data that is of the first task and that needs to be sent by the first terminal device to a task processing function network element;
policy 2: forwarding, via the task forwarding function network element or the second access network device, data that is of the first task and that needs to be sent by the first terminal device to a second terminal device, where the second terminal device is served by the second access network device;
policy 3: sending, through an air interface, data that is of the first task and that needs to be sent by the first terminal device to a third terminal device, where the third terminal device is served by the first access network device; and
policy 4: sending, through an air interface, data that is of the first task and that needs to be sent to the first terminal device.

In a possible implementation method, the method further includes: sending a first message to the task control function network element, where the first message includes identification information of a first terminal device and identification information of a first access network device.

According to a third aspect, an embodiment of this application provides a task management method. The method may be performed by a second access network device or a module (for example, a chip) used in the second access network device. The method includes: receiving second indication information from a task control function network element, where the second indication information indicates to delete an association between a second tunnel for a first task and a first terminal device, or indicates to delete the second tunnel for the first task, and the second tunnel is a tunnel between a task forwarding function network element and the second access network device; and deleting, based on the second indication information, the association between the second tunnel and the first terminal device or deleting the second tunnel.

In a possible implementation method, the method further includes: receiving second policy information from the task control function network element, where the second policy information indicates to forward, via the task forwarding function network element or the first access network device, data that is of the first task and that needs to be sent by the second terminal device to the first terminal device, and the second terminal device is served by the second access network device; and the first access network device is a target access network device, and the second access network device is a source access network device.

In a possible implementation method, the method further includes: sending a first message to the task control function network element, where the first message includes identification information of a first terminal device and identification information of a first access network device.

According to a fourth aspect, an embodiment of this application provides a task management method. The method may be performed by a task forwarding function network element or a module (for example, a chip) used in the task forwarding function network element. The method includes: receiving first indication information and second indication information from a task control function network element, where the first indication information indicates to establish an association between a first tunnel for a first task and a first terminal device, and the first tunnel is a tunnel between a task forwarding function network element and a first access network device; the second indication information indicates to delete an association between a second tunnel for the first task and the first terminal device, or indicates to delete the second tunnel for the first task, and the second tunnel is a tunnel between the task forwarding function network element and a second access network device; and the first access network device is a target access network device, and the second access network device is a source access network device; and establish the association between the first tunnel and the first terminal device based on the first indication information; and deleting, based on the second indication information, the association between the second tunnel and the first terminal device or deleting the second tunnel.

In a possible implementation method, the method further includes: receiving third policy information from the task control function network element, where the third policy information indicates to forward, via the first access network device, data that is of the first task and that needs to be sent to the first terminal device.

According to a fifth aspect, an embodiment of this application provides a communication apparatus. The apparatus may be a task control function network element or a module (for example, a chip) used in the task control function network element. The apparatus has a function of implementing any implementation method according to the first aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a first access network device or a module (for example, a chip) used in the first access network device. The apparatus has a function of implementing any implementation method according to the second aspect. The function may be implemented by hardware, or may be implemented by hardware executing corresponding software. The hardware or the software includes one or more modules corresponding to the function.

According to a seventh aspect, an embodiment of this application provides a communication apparatus. The apparatus may be a second access network device or a module (for example, a chip) used in the second access network device. The apparatus has a function of implementing any implementation method according to the third aspect. The function may be implemented by hardware, or may be implemented by hardware executing corresponding software. The hardware or the software includes one or more modules corresponding to the function.

According to an eighth aspect, an embodiment of this application provides a communication apparatus. The apparatus may be a task forwarding function network element or a module (for example, a chip) used in the task forwarding function network element. The apparatus has a function of implementing any implementation method according to the fourth aspect. The function may be implemented by hardware, or may be implemented by hardware executing corresponding software. The hardware or the software includes one or more modules corresponding to the function.

According to a ninth aspect, an embodiment of this application provides a communication apparatus, including units or means (means) configured to perform steps of any implementation method according to the first aspect to the fourth aspect.

According to a tenth aspect, an embodiment of this application provides a communication apparatus, including a processor and an interface circuit. The processor is configured to: communicate with another apparatus through the interface circuit, and perform any implementation method according to the first aspect to the fourth aspect. There are one or more processors.

According to an eleventh aspect, an embodiment of this application provides a communication apparatus, including a processor. The processor is configured to invoke a program, to perform any implementation method according to the first aspect to the fourth aspect. In addition, there may be one or more processors.

Optionally, the communication apparatus may further include a memory. The memory is coupled to the processor. The memory may be located inside the apparatus, or may be located outside the apparatus.

According to a twelfth aspect, an embodiment of this application provides a communication apparatus, including a processor. When the apparatus runs, the processor executes computer instructions, and the apparatus is caused to perform any implementation method according to the first aspect to the fourth aspect.

Optionally, the communication apparatus may further include a memory, and the memory is configured to store the computer instructions.

According to a thirteenth aspect, an embodiment of this application further provides a computer program product. The computer program product includes a computer program or instructions, and when the computer program or the instructions are run on a communication apparatus, any implementation method according to the first aspect to the fourth aspect is performed.

According to a fourteenth aspect, an embodiment of this application further provides a computer-readable storage medium. The computer-readable storage medium stores instructions, and when the instructions are run on a communication apparatus, any implementation method according to the first aspect to the fourth aspect is performed.

According to a fifteenth aspect, an embodiment of this application further provides a chip system, including a processor, configured to perform any implementation method according to the first aspect to the fourth aspect.

According to a sixteenth aspect, an embodiment of this application further provides a communication system, including a task control function network element configured to perform any implementation method according to the first aspect, a first access network device configured to perform any implementation method according to the second aspect, and a second access network device configured to perform any implementation method according to the third aspect.

In an implementation method, the communication system further includes a task forwarding function network element configured to perform any implementation method according to the fourth aspect.

### BRIEF DESCRIPTION OF DRAWINGS

FIG. 1 is a diagram of a 5G network architecture based on a service-based architecture;
FIG. 2 is a schematic flowchart of a task management method according to an embodiment of this application;
FIG. 3 is an example diagram of a scenario in which a terminal device switches according to an embodiment of this application;
FIG. 4 is a diagram of a communication apparatus according to an embodiment of this application; and
FIG. 5 is a diagram of a communication apparatus according to an embodiment of this application.

### DESCRIPTION OF EMBODIMENTS

To cope with challenges of wireless broadband technologies and maintain a leading advantage of a 3rd generation partnership project (3rd generation partnership project, 3GPP) network, the 3GPP standard group has formulated a next generation mobile communication network system (next generation system) architecture, which is referred to as a 5G network architecture. The architecture not only supports access to a 5G core network (core network, CN) by using a radio access technology (for example, a long term evolution (long term evolution, LTE) access technology and a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

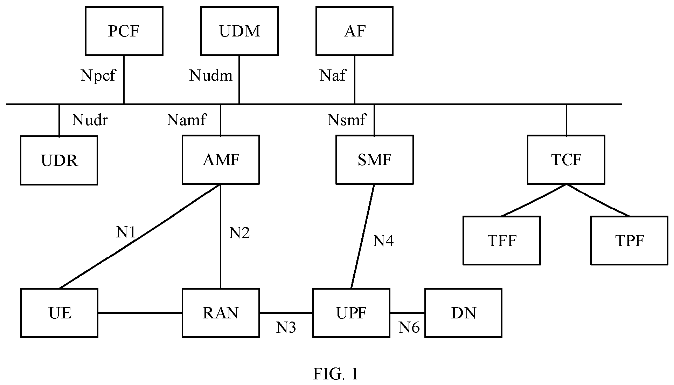

FIG. 1 is a diagram of a 5G network architecture based on a service-based architecture. The 5G network architecture shown in FIG. 1 may include an access network device and a core network device. A terminal device accesses a data network (data network, DN) through the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, and a user plane function (user plane function, UPF) network element.

The terminal device may be user equipment (user equipment, UE), a mobile station, a mobile terminal device, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wear, smart transportation, and smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like.

The access network device may be a radio access network (RAN) device or a wireline access network (wireline access network, WAN) device. The radio access network device includes a 3GPP access network device, an untrusted non-3GPP access network device, and a trusted non-3GPP access network device. The 3GPP access network device includes but is not limited to: an evolved NodeB (evolved NodeB, NodeB) in long term evolution (long term evolution, LTE), a next generation NodeB (next generation NodeB, gNB) in a 5G mobile communication system, and a base station in a future mobile communication system. The untrusted non-3GPP access network device includes but is not limited to: an untrusted non-3GPP access gateway or N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The wireline access network device includes but is not limited to: a wireline access gateway (wireline access gateway), a fixed-line phone network device, a switch, or a router.

In another possible scenario, a plurality of RAN nodes collaborate to assist the terminal device in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The access network device and the terminal device may be located in fixed locations, or may be movable. The access network device and the terminal device may be deployed terrestrially, including indoors or outdoors, or may be handheld or vehicle-mounted; or may be deployed on a water surface; or may be deployed on a plane, a balloon, or a man-made satellite in the sky. Application scenarios of the access network device and the terminal device are not limited in embodiments of this application.

The AMF network element includes functions such as mobility management, and access authentication/authorization. In addition, the AMF is responsible for transferring a user policy between a terminal device and a PCF.

The SMF network element includes functions such as session management, execution of a control policy delivered by a PCF, UPF selection, and allocation of an internet protocol (internet protocol, IP) address of a terminal device.

The UPF network element includes user plane data forwarding, session/flow-level-based charging statistics collection, bandwidth limiting, and the like.

The UDM network element includes functions such as performing of subscription data management, and user access authorization.

The UDR network element includes functions such as storage and retrieval of subscription data, policy data, application data, and other types of data.

The NEF network element is configured to support exposure of capabilities and events.

The AF network element transfers a requirement of an application side for a network side, for example, a quality of service (quality of service, QoS) requirement, user status event subscription, or the like. The AF may be a third-party functional entity, or may be an operator-deployed application service, for example, an IP multimedia subsystem (IP Multimedia Subsystem, IMS) voice call business. The AF network element includes an AF network element in a core network (that is, an AF network element of an operator) and a third-party AF network element (for example, an application server of an enterprise).

The PCF network element includes policy control functions such as session-level or service flow-level charging, QoS bandwidth guarantee, mobility management, and terminal device policy decision-making. The PCF network element includes an access and mobility management policy control function (access and mobility management policy control function, AM PCF) network element and a session management policy control function (session management PCF, SM PCF) network element. The AM PCF network element is configured to formulate an AM policy for a terminal device, and the AM PCF network element may also be referred to as a policy control function network element that provides a service for a terminal device (PCF for UE). The SM PCF network element is configured to formulate a session management policy (session management policy, SM policy) for a session. The SM PCF network element may also be referred to as a policy control network element that provides a service for the session (PCF for a PDU session).

The NRF network element may be configured to provide a network element discovery function, and provide, based on a request of another network element, network element information corresponding to a network element type. The NRF further provides network element management services, including network element registration, update, and deregistration, network element status subscription and push, and the like.

The AUSF network element is responsible for authenticating a user, to determine whether the user or a device is allowed to access a network.

The DN is a network located outside the operator network. The operator network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 1, Npcf, Nufr, Nudm, Naf, Namf, and Nsmf are service-based interfaces provided by the PCF, the UDR, the UDM, the AF, the AMF, and the SMF respectively, and are configured to invoke corresponding service-based operations. N1, N2, N3, N4, and N6 are interface sequence numbers. Meanings of these interface sequence numbers are as follows:
(1) N1 is an interface between the AMF and the terminal device, and may be configured to transfer non-access stratum (non-access stratum, NAS) signaling (for example, including a QoS rule from the AMF) and the like to the terminal device.
(2) N2 is an interface between the AMF and the access network device, and may be configured to transfer radio bearer control information from a core network side to the access network device, and the like.
(3) N3 is an interface between the access network device and the UPF, and is mainly configured to transfer uplink and downlink user plane data between the access network device and the UPF.
(4) N4 is an interface between the SMF and the UPF, and may be configured to transfer information between a control plane and a user plane, including delivering a forwarding rule, a QoS rule, a traffic statistics rule, and the like from the control plane to the user plane, and reporting user plane information.
(5) N6 is an interface between the UPF and the DN, and is configured to transfer uplink and downlink user data flows between the UPF and the DN.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

To support functions of a TA and a TE, in this application, a task control function (task control function, TCF) network element, a task processing function (task processing function, TPF) network element, and a task forwarding function (task forwarding function, TFF) network element are added to the 5G network shown in FIG. 1 or a future communication network (for example, a 6G network).

The TCF provides a TA function and the like on the core network side, including task deployment, initiation, deletion, modification, monitoring, and the like.

The TPF network element may provide a TE function and the like on the core network side, and exchange task data with another task executor (for example, another TPF network element or a terminal device).

The TFF network element may provide a function of forwarding task data between the TPF on the core network side and another network element, for example, forwarding task data sent by the TPF network element to a terminal device or another TPF network element, and forwarding task data sent by the terminal device to the corresponding TPF network element.

In this embodiment of this application, the terminal device may also have a TE function. Therefore, the terminal device is also a task executor.

It should be noted that names of the task control function network element, the task processing function network element, and the task forwarding function network element may also change in future communication, or the network elements may have other names. This is not limited in this application.

Due to mobility of the terminal device, how the terminal device exchanges the task data with another task executor after the terminal device switches between access network devices, to ensure continuity of the task data is a to-be-resolved problem.

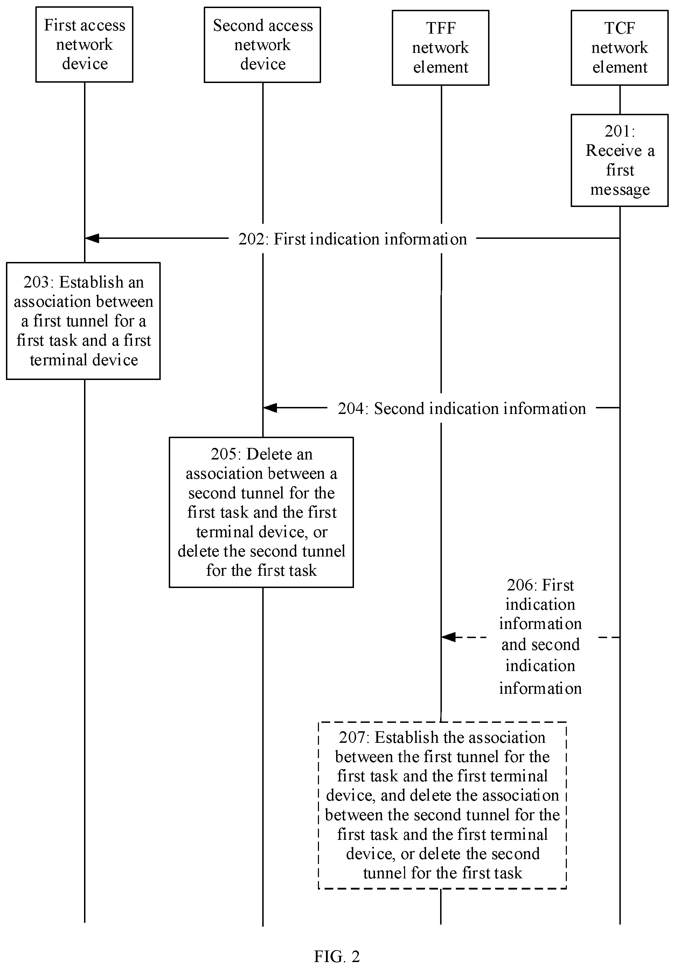

FIG. 2 is a schematic flowchart of a task management method according to an embodiment of this application. The method is performed by a TCF network element or a module (for example, a chip) in the TCF network element, a first access network device or a module (for example, a chip) in the first access network device, a second access network device or a module (for example, a chip) in the second access network device, and a TFF network element or a module (for example, a chip) in the TFF network element. For ease of description, the following uses an example in which the method is performed by the TCF network element, the first access network device, the second access network device, and the TFF network element for description.

Before switching is completed, a first terminal device accesses the second access network device (referred to as a source access network device), and the second access network device provides a service. After the switching is completed, the first terminal device accesses the first access network device (referred to as a target access network device), and the first access network device provides a service.

The method includes the following steps.

Step 201: A TCF network element receives a first message.

The first message includes identification information of a first terminal device and identification information of a first access network device.

The identification information of the first terminal device may be a subscription permanent identifier (subscription permanent identifier, SUPI), a subscription concealed identifier (subscription concealed identifier, SUCI), an address, or other information used to uniquely identify the first terminal device.

The identification information of the first access network device may be an identifier (identifier, ID), an address, or the like of the first access network device.

The first message may be a location update message, a handover message, a handover complete message, or the like. The first message is used to notify the TCF network element of the identification information of the first terminal device and identification information of a target access network device of the first terminal device.

The first message may be sent by the first access network device, a second access network device, an AMF network element, or another network element to the TCF network element.

Step 202: The TCF network element sends first indication information to the first access network device based on the first message.

The first indication information indicates to establish an association between a first tunnel for a first task and the first terminal device, where the first tunnel is a tunnel between a TFF network element and the first access network device.

The first task herein may include a task that the first terminal device has joined before switching when connecting to the second access network device. For example, before the first terminal device switches, the first terminal device joins a task 1, a task 2, and a task 3 when the first terminal device is connected to the second access network device. In this case, the first indication information indicates to establish an association between a first tunnel for the task 1 and the first terminal device, indicates to establish an association between a first tunnel for the task 2 and the first terminal device, and indicates to establish an association between a first tunnel for the task 3 and the first terminal device.

Optionally, before step 202, the TCF network element further determines whether the first tunnel for the first task has been established between the TFF network element and the first access network device. If the first tunnel has not been established, the TCF network element needs to first establish the first tunnel for the first task.

Step 203: The first access network device establishes the association between the first tunnel for the first task and the first terminal device.

Specifically, the first access network device may record a mapping relationship between the identification information of the first terminal device and identification information of a tunnel for the first task.

Step 204: The TCF network element sends second indication information to the second access network device based on the first message.

The second indication information indicates to delete an association between a second tunnel for the first task and the first terminal device, or indicates to delete the second tunnel for the first task, where the second tunnel is a tunnel between the TFF network element and the second access network device.

Step 205: The second access network device deletes the association between the second tunnel for the first task and the first terminal device, or deletes the second tunnel for the first task.

In an implementation method, before the switching is completed, if the first terminal device is a unique terminal device that joins the first task, after the first terminal device switches to the first access network device, the second access network device may delete the association between the second tunnel for the first task and the first terminal device, but retain context information of the first tunnel, so that an association between the first tunnel and another terminal device can be quickly established when the another terminal device needs to join the first task subsequently. That the second access network device deletes the association between the second tunnel for the first task and the first terminal device may be specifically: deleting a mapping relationship between identification information of the second tunnel for the first task and the identification information of the first terminal device.

In another implementation method, before the switching is completed, if the first terminal device is a unique terminal device that joins the first task, after the first terminal device switches to the first access network device, the second access network device may delete the second tunnel for the first task, that is, the second access network device may delete context information of the first tunnel, so that storage overheads of the second access network device can be reduced.

In another implementation method, before the switching is completed, if a plurality of terminal devices connected to the second access network device join the first task, and the plurality of terminal devices include the first terminal device, after the first terminal device switches to the first access network device, the second access network device deletes the association between the second tunnel for the first task and the first terminal device, and needs to retain context information of the first tunnel, so that another terminal device is allowed to continue to execute the first task.

Optionally, the foregoing solution may further include the following steps.

Step 206: The TCF network element sends the first indication information and the second indication information to the TFF network element based on the first message.

Step 207: The TFF network element establishes the association between the first tunnel for the first task and the first terminal device, and deletes the association between the second tunnel for the first task and the first terminal device, or deletes the second tunnel for the first task.

An operation of the TFF network element is consistent with that of the second access network device. To be specific, both the TFF network element and the second access network device delete the association between the second tunnel for the first task and the first terminal device, or delete the second tunnel for the first task.

In the foregoing step 202 to step 207, step 203 needs to be performed after step 202, step 205 needs to be performed after step 204, and step 207 needs to be performed after step 206. A sequence of any other steps is not limited.

According to the foregoing solution, the first terminal device may execute the first task before switching when connecting to the second access network device, and establish the association between the first tunnel for the first task and the first terminal device after switching to the first access network device, so that the first terminal device can continue to execute the first task, and exchange data of the first task with another task executor, thereby ensuring continuity of task data and task execution efficiency.

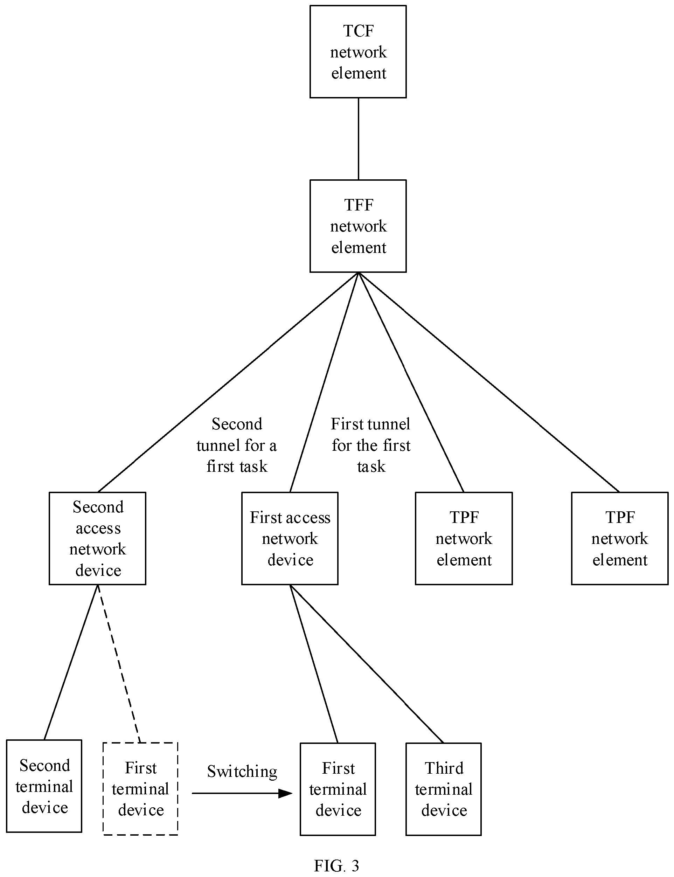

In an implementation method, after the first terminal switches to the first access network device, the TCF network element may further configure or update a forwarding policy for the first access network device, the second access network device, and the TFF network element. The following provides descriptions with reference to FIG. 3. FIG. 3 is an example diagram of a scenario in which a terminal device switches. In this example, before switching is completed, the first terminal device accesses the second access network device (referred to as a source access network device), and the second access network device provides a service. The second tunnel for the first task is established between the TFF network element and the second access network device. Data that is of the first task and that needs to be exchanged between the first terminal device and another terminal device or a TPF network element may be forwarded via the second tunnel. After the switching is completed, the first terminal device accesses the first access network device (referred to as a target access network device), and the first access network device provides a service. The first tunnel for the first task is established between the TFF network element and the first access network device. Data that is of the first task and that needs to be exchanged between the first terminal device and another terminal device or a TPF network element may be forwarded via the first tunnel. In addition, a second terminal device accesses the second access network device, and a third terminal device accesses the first access network device.

In an implementation method, after step 201, the TCF network element sends first policy information to the first access network device, where the first policy information indicates at least one of the following Policy 1 to Policy 4:
Policy 1: Forward, via the TFF network element, data that is of the first task and that needs to be sent by the first terminal device to the TPF network element.
Policy 2: Forward, via the TFF network element or the second access network device, data that is of the first task and that needs to be sent by the first terminal device to the second terminal device.
Policy 3: Send, through an air interface, data that is of the first task and that needs to be sent by the first terminal device to the third terminal device.
Policy 4: Send, through an air interface, data that is of the first task and that needs to be sent to the first terminal device.

Refer to the example in FIG. 3. According to Policy 1, a path of the data that is of the first task and that is sent by the first terminal device to the TPF network element is: first terminal device -> first access network device -> TFF network element -> TPF network element.

According to Policy 2, a path of the data that is of the first task and that is sent by the first terminal device to the second terminal device is: first terminal device -> first access network device -> TFF network element -> second access network device -> second terminal device, or is: first terminal device -> first access network device -> second access network device -> second terminal device.

According to Policy 3, a path of the data that is of the first task and that is sent by the first terminal device to the third terminal device is: first terminal device -> first access network device -> third terminal device.

According to Policy 4, a path of the data that is of the first task and that needs to be sent to the first terminal device is: first access network device -> first terminal device. Specifically, if the third terminal device needs to send data of the first task to the first terminal device, a path of the data of the first task is: third terminal device -> first access network device -> first terminal device. If the second terminal device needs to send data of the first task to the first terminal device, a path of the data of the first task is: second terminal device -> second access network device -> first access network device -> first terminal device, or is: second terminal device -> second access network device -> TFF network element -> first access network device -> first terminal device. If the TPF network element needs to send data of the first task to the first terminal device, a path of the data of the first task is: TPF network element -> TFF network element -> first access network device -> first terminal device.

In an implementation method, after step 201, the TCF network element sends second policy information to the second access network device, where the second policy information indicates to forward, via the TFF network element or the first access network device, data that is of the first task and that needs to be sent by the second terminal device to the first terminal device. Refer to the example in FIG. 3. A path of the data that is of the first task and that is sent by the second terminal device to the first terminal device is: second terminal device -> second access network device -> TFF network element -> first access network device -> first terminal device, or is: second terminal device -> second access network device -> first access network device -> first terminal device.

In an implementation method, after step 201, the TCF network element sends third policy information to the TFF network element, where the third policy information indicates to forward, via the first access network device, data that is of the first task and that needs to be sent to the first terminal device. Refer to the example in FIG. 3. After the TFF receives the data that is of the first task and that needs to be sent to the first terminal device, a sending path is: TFF network element -> first access network device -> first terminal device.

It may be understood that, to implement functions in the foregoing embodiments, the policy control function network element, the policy forwarding function network element, the first access network device, or the second access network device includes a corresponding hardware structure and/or software module for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

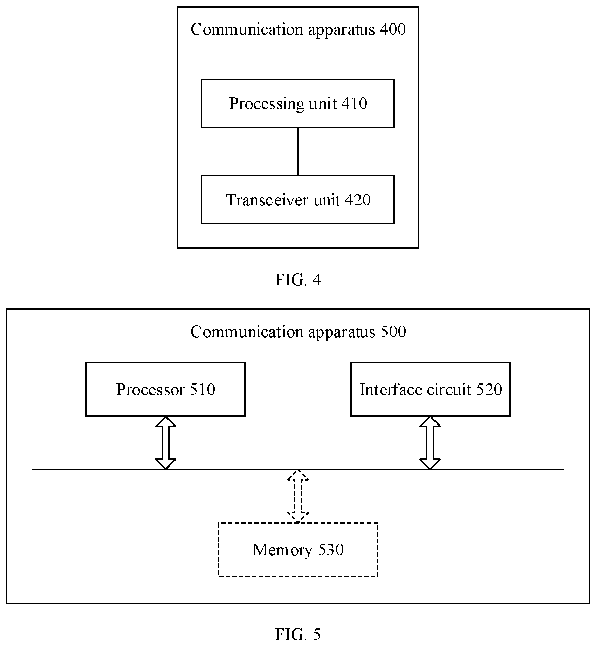

FIG. 4 and FIG. 5 are diagrams of structures of possible communication apparatuses according to embodiments of this application. These communication apparatuses may be configured to implement a function of the policy control function network element, the policy forwarding function network element, the first access network device, or the second access network device in the foregoing method embodiments, and therefore can also implement beneficial effects of the foregoing method embodiments. In embodiments of this application, the communication apparatus may be the policy control function network element, the policy forwarding function network element, the first access network device, or the second access network device, or may be a module (for example, a chip) used in the policy control function network element, the policy forwarding function network element, the first access network device, or the second access network device.

A communication apparatus 400 shown in FIG. 4 includes a processing unit 410 and a transceiver unit 420. The communication apparatus 400 may be configured to implement a function of the policy control function network element, the policy forwarding function network element, the first access network device, or the second access network device in the foregoing method embodiments.

When the communication apparatus 400 is configured to implement a function of the first access network device, both the processing unit 410 and the transceiver unit 420 in the communication apparatus are located in the first access network device, or the processing unit 410 is located in a CU of the first access network device, and the transceiver unit 420 is located in a DU of the first access network device. Alternatively, in an ORAN system, the processing unit 410 is located in an O-CU and/or an O-DU of the first access network device, and the transceiver unit 420 is located in an O-DU and/or an O-RU of the first access network device.

When the communication apparatus 400 is configured to implement a function of the second access network device, both the processing unit 410 and the transceiver unit 420 in the communication apparatus are located in the second access network device, or the processing unit 410 is located in a CU of the second access network device, and the transceiver unit 420 is located in a DU of the second access network device. Alternatively, in an ORAN system, the processing unit 410 is located in an O-CU and/or an O-DU of the second access network device, and the transceiver unit 420 is located in an O-DU and/or an O-RU of the second access network device.

When the communication apparatus 400 is configured to implement a function of the policy control function network element in the foregoing method embodiment, the processing unit 410 is configured to: control the transceiver unit 420 to: receive a first message, where the first message includes identification information of a first terminal device and identification information of a first access network device; and send, based on the first message, first indication information to the first access network device and send second indication information to a second access network device, where the first indication information indicates to establish an association between a first tunnel for a first task and the first terminal device, and the first tunnel is a tunnel between a task forwarding function network element and the first access network device; the second indication information indicates to delete an association between a second tunnel for the first task and the first terminal device, or indicates to delete the second tunnel for the first task, and the second tunnel is a tunnel between the task forwarding function network element and the second access network device; and the first access network device is a target access network device, and the second access network device is a source access network device.

In a possible implementation method, the processing unit 410 is further configured to control the transceiver unit 420 to send the first indication information and the second indication information to the task forwarding function network element.

In a possible implementation method, the processing unit 410 is further configured to: determine whether the first tunnel has been established between the task forwarding function network element and the first access network device; and establish the first tunnel if the first tunnel has not been established.

In a possible implementation method, the processing unit 410 is further configured to control the transceiver unit 420 to send first policy information to the first access network device, where the first policy information indicates at least one of the following policies:
policy 1: forwarding, via the task forwarding function network element, data that is of the first task and that needs to be sent by the first terminal device to a task processing function network element;
policy 2: forwarding, via the task forwarding function network element or the second access network device, data that is of the first task and that needs to be sent by the first terminal device to a second terminal device, where the second terminal device is served by the second access network device;
policy 3: sending, through an air interface, data that is of the first task and that needs to be sent by the first terminal device to a third terminal device, where the third terminal device is served by the first access network device; and
policy 4: sending, through an air interface, data that is of the first task and that needs to be sent to the first terminal device.

In a possible implementation method, the processing unit 410 is further configured to control the transceiver unit 420 to send second policy information to the second access network device, where the second policy information indicates to forward, via the task forwarding function network element or the first access network device, data that is of the first task and that needs to be sent by the second terminal device to the first terminal device, and the second terminal device is served by the second access network device.

In a possible implementation method, the processing unit 410 is further configured to control the transceiver unit 420 to send third policy information to the task forwarding function network element, where the third policy information indicates to forward, via the first access network device, data that is of the first task and that needs to be sent to the first terminal device.

When the communication apparatus 400 is configured to implement a function of the first access network device in the foregoing method embodiment, the transceiver unit 420 is configured to receive first indication information from a task control function network element, where the first indication information indicates to establish an association between a first tunnel for a first task and the first terminal device, and the first tunnel is a tunnel between a task forwarding function network element and a first access network device; and the processing unit 410 is configured to establish the association between the first tunnel and the first terminal device based on the first indication information.

In a possible implementation method, the transceiver unit 420 is further configured to receive first policy information from the task control function network element, where the first policy information indicates at least one of the following policies:
policy 1: forwarding, via the task forwarding function network element, data that is of the first task and that needs to be sent by the first terminal device to a task processing function network element;
policy 2: forwarding, via the task forwarding function network element or the second access network device, data that is of the first task and that needs to be sent by the first terminal device to a second terminal device, where the second terminal device is served by the second access network device;
policy 3: sending, through an air interface, data that is of the first task and that needs to be sent by the first terminal device to a third terminal device, where the third terminal device is served by the first access network device; and
policy 4: sending, through an air interface, data that is of the first task and that needs to be sent to the first terminal device.

In a possible implementation method, the transceiver unit 420 is further configured to send a first message to the task control function network element, where the first message includes identification information of a first terminal device and identification information of a first access network device.

When the communication apparatus 400 is configured to implement a function of the second access network device in the foregoing method embodiment, the transceiver unit 420 is configured to receive second indication information from a task control function network element, where the second indication information indicates to delete an association between a second tunnel for a first task and a first terminal device, or indicates to delete the second tunnel for the first task, and the second tunnel is a tunnel between a task forwarding function network element and the second access network device; and the processing unit 410 is configured to delete, based on the second indication information, the association between the second tunnel and the first terminal device or delete the second tunnel.

In a possible implementation method, the transceiver unit 420 is further configured to receive second policy information from the task control function network element, where the second policy information indicates to forward, via the task forwarding function network element or the first access network device, data that is of the first task and that needs to be sent by the second terminal device to the first terminal device, and the second terminal device is served by the second access network device; and the first access network device is a target access network device, and the second access network device is a source access network device.

In a possible implementation method, the transceiver unit 420 is further configured to send a first message to the task control function network element, where the first message includes identification information of a first terminal device and identification information of a first access network device.

When the communication apparatus 400 is configured to implement a function of the policy forwarding function network element in the foregoing method embodiment, the transceiver unit 420 is configured to receive first indication information and second indication information from a task control function network element, where the first indication information indicates to establish an association between a first tunnel for a first task and the first terminal device, and the first tunnel is a tunnel between a task forwarding function network element and a first access network device; the second indication information indicates to delete an association between a second tunnel for the first task and the first terminal device, or indicates to delete the second tunnel for the first task, and the second tunnel is a tunnel between the task forwarding function network element and a second access network device; and the first access network device is a target access network device, and the second access network device is a source access network device; and the processing unit 410 is configured to establish the association between the first tunnel and the first terminal device based on the first indication information; and deleting, based on the second indication information, the association between the second tunnel and the first terminal device or deleting the second tunnel.

In a possible implementation method, the transceiver unit 420 is further configured to receive third policy information from the task control function network element, where the third policy information indicates to forward, via the first access network device, data that is of the first task and that needs to be sent to the first terminal device.

For more detailed descriptions about the processing unit 410 and the transceiver unit 420, directly refer to related descriptions in the foregoing method embodiments. Details are not described herein again.

A communication apparatus 500 shown in FIG. 5 includes a processor 510 and an interface circuit 520. The processor 510 and the interface circuit 520 are coupled to each other. It may be understood that the interface circuit 520 may be a transceiver or an input/output interface. Optionally, the communication apparatus 500 may further include a memory 530 configured to store instructions to be executed by the processor 510, store input data required for the processor 510 to run the instructions, or store data generated after the processor 510 runs the instructions.

When the communication apparatus 500 is configured to implement the foregoing method embodiments, the processor 510 is configured to implement a function of the processing unit 410, and the interface circuit 520 is configured to implement a function of the transceiver unit 420.

It can be understood that the processor in embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instruction may include corresponding software modules. The software modules may be stored in a random-access memory, a flash memory, a read-only memory, a programmable read-only memory, an erasable programmable read-only memory, an electrically erasable programmable read-only memory, a register, a hard disk, a removable hard disk, and a compact optical disk read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a policy control function network element, a policy forwarding function network element, a first access network device, or a second access network device. Certainly, the processor and the storage medium may also exist in the access network device or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. The computer program (English: Computer Program) is a set of instructions that indicate each step of an electronic computer or another device having a message processing capability, is usually written in a program design language, and is run in a target system structure. When the computer programs or the instructions are loaded and executed on a computer, procedures or functions in embodiments of this application are all or partially executed. The computer may be a general-purpose computer, a dedicated computer, a computer network, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A task management method, comprising:
receiving a first message, wherein the first message comprises identification information of a first terminal device and identification information of a first access network device; and
sending, based on the first message, first indication information to the first access network device and sending second indication information to a second access network device, wherein
the first indication information indicates to establish an association between a first tunnel for a first task and the first terminal device, and the first tunnel is a tunnel between a task forwarding function network element and the first access network device; the second indication information indicates to delete an association between a second tunnel for the first task and the first terminal device, or indicates to delete the second tunnel for the first task, and the second tunnel is a tunnel between the task forwarding function network element and the second access network device; and the first access network device is a target access network device, and the second access network device is a source access network device.

2. The method according to claim 1, wherein the method further comprises:
sending the first indication information and the second indication information to the task forwarding function network element based on the first message.

3. The method according to claim 1 or 2, wherein the method further comprises:
determining whether the first tunnel has been established between the task forwarding function network element and the first access network device; and
establishing the first tunnel when the first tunnel has not been established.

4. The method according to any one of claims 1 to 3, wherein the method further comprises:
sending first policy information to the first access network device, wherein the first policy information indicates at least one of the following policies:
policy 1: forwarding, via the task forwarding function network element, data that is of the first task and that needs to be sent by the first terminal device to a task processing function network element;
policy 2: forwarding, via the task forwarding function network element or the second access network device, data that is of the first task and that needs to be sent by the first terminal device to a second terminal device, wherein the second terminal device is served by the second access network device;
policy 3: sending, through an air interface, data that is of the first task and that needs to be sent by the first terminal device to a third terminal device, wherein the third terminal device is served by the first access network device; or
policy 4: sending, through an air interface, data that is of the first task and that needs to be sent to the first terminal device.

5. The method according to any one of claims 1 to 4, wherein the method further comprises:
sending second policy information to the second access network device, wherein the second policy information indicates to forward, via the task forwarding function network element or the first access network device, data that is of the first task and that needs to be sent by the second terminal device to the first terminal device, wherein the second terminal device is served by the second access network device.

6. The method according to any one of claims 1 to 5, wherein the method further comprises:
sending third policy information to the task forwarding function network element, wherein the third policy information indicates to forward, via the first access network device, data that is of the first task and that needs to be sent to the first terminal device.

7. A task management method, comprising:
receiving first indication information and second indication information from a task control function network element, wherein the first indication information indicates to establish an association between a first tunnel for a first task and the first terminal device, and the first tunnel is a tunnel between a task forwarding function network element and the first access network device; the second indication information indicates to delete an association between a second tunnel for the first task and the first terminal device, or indicates to delete the second tunnel for the first task, and the second tunnel is a tunnel between the task forwarding function network element and the second access network device; and the first access network device is a target access network device, and the second access network device is a source access network device; and establishing the association between the first tunnel and the first terminal device based on the first indication information; and
deleting, based on the second indication information, the association between the second tunnel and the first terminal device or deleting the second tunnel.

8. The method according to claim 7, wherein the method further comprises:
receiving third policy information from the task control function network element, wherein the third policy information indicates to forward, via the first access network device, data that is of the first task and that needs to be sent to the first terminal device.

9. A communication apparatus, comprising a processing unit and a transceiver unit, wherein
the processing unit is configured to control the transceiver unit to:
receive a first message, wherein the first message comprises identification information of a first terminal device and identification information of a first access network device; and
sending, based on the first message, first indication information to the first access network device and sending second indication information to a second access network device, wherein
the first indication information indicates to establish an association between a first tunnel for a first task and the first terminal device, and the first tunnel is a tunnel between a task forwarding function network element and the first access network device; the second indication information indicates to delete an association between a second tunnel for the first task and the first terminal device, or indicates to delete the second tunnel for the first task, and the second tunnel is a tunnel between the task forwarding function network element and the second access network device; and the first access network device is a target access network device, and the second access network device is a source access network device.

10. The apparatus according to claim 9, wherein the processing unit is further configured to control the transceiver unit to send the first indication information and the second indication information to the task forwarding function network element based on the first message.

11. The apparatus according to claim 9 or 10, wherein the processing unit is further configured to: determine whether the first tunnel has been established between the task forwarding function network element and the first access network device; and establish the first tunnel if the first tunnel has not been established.

12. The apparatus according to any one of claims 9 to 11, wherein the processing unit is further configured to control the transceiver unit to send first policy information to the first access network device, wherein the first policy information indicates at least one of the following policies:
policy 1: forwarding, via the task forwarding function network element, data that is of the first task and that needs to be sent by the first terminal device to a task processing function network element;
policy 2: forwarding, via the task forwarding function network element or the second access network device, data that is of the first task and that needs to be sent by the first terminal device to a second terminal device, wherein the second terminal device is served by the second access network device;
policy 3: sending, through an air interface, data that is of the first task and that needs to be sent by the first terminal device to a third terminal device, wherein the third terminal device is served by the first access network device; and
policy 4: sending, through an air interface, data that is of the first task and that needs to be sent to the first terminal device.

13. The apparatus according to any one of claims 9 to 12, wherein the processing unit is further configured to control the transceiver unit to send second policy information to the second access network device, wherein the second policy information indicates to forward, via the task forwarding function network element or the first access network device, data that is of the first task and that needs to be sent by the second terminal device to the first terminal device, and the second terminal device is served by the second access network device.

14. The apparatus according to any one of claims 9 to 13, wherein the processing unit is further configured to control the transceiver unit to send third policy information to the task forwarding function network element, wherein the third policy information indicates to forward, via the first access network device, data that is of the first task and that needs to be sent to the first terminal device.

15. A communication apparatus, comprising:
a transceiver unit, configured to: receive first indication information and second indication information from a task control function network element, wherein the first indication information indicates to establish an association between a first tunnel for a first task and the first terminal device, and the first tunnel is a tunnel between a task forwarding function network element and the first access network device; the second indication information indicates to delete an association between a second tunnel for the first task and the first terminal device, or indicates to delete the second tunnel for the first task, and the second tunnel is a tunnel between the task forwarding function network element and the second access network device; and the first access network device is a target access network device, and the second access network device is a source access network device; and establish the association between the first tunnel and the first terminal device based on the first indication information; and
a processing unit, configured to delete, based on the second indication information, the association between the second tunnel and the first terminal device or delete the second tunnel.

16. The apparatus according to claim 15, wherein the transceiver unit is further configured to receive third policy information from the task control function network element, wherein the third policy information indicates to forward, via the first access network device, data that is of the first task and that needs to be sent to the first terminal device.

17. A communication system, comprising:
a task control function network element, configured to: receive a first message, wherein the first message comprises identification information of a first terminal device and identification information of a first access network device; and send, based on the first message, first indication information to the first access network device and send second indication information to a second access network device, wherein the first indication information indicates to establish an association between a first tunnel for a first task and the first terminal device, and the first tunnel is a tunnel between a task forwarding function network element and the first access network device; the second indication information indicates to delete an association between a second tunnel for the first task and the first terminal device, or indicates to delete the second tunnel for the first task, and the second tunnel is a tunnel between the task forwarding function network element and the second access network device; and the first access network device is an access network device after switching, and the second access network device is an access network device before the switching;
the first access network device, configured to: receive the first indication information, and establish the association between the first tunnel and the first terminal device based on the first indication information; and
the second access network device, configured to: receive the second indication information, and delete, based on the second indication information, the association between the second tunnel and the first terminal device or delete the second tunnel.

18. The system according to claim 17, wherein the system further comprises the task forwarding function network element;
the task control function network element is further configured to send the first indication information and the second indication information to the task forwarding function network element based on the first message; and
the task forwarding function network element is configured to: establish the association between the first tunnel and the first terminal device based on the first indication information; and delete, based on the second indication information, the association between the second tunnel and the first terminal device or delete the second tunnel.

19. The system according to claim 17 or 18, wherein the task control function network element is further configured to: determine whether the first tunnel has been established between the task forwarding function network element and the first access network device; and establish the first tunnel if the first tunnel has not been established.

20. The system according to any one of claims 17 to 19, wherein the task control function network element is further configured to send first policy information to the first access network device, wherein the first policy information indicates at least one of the following policies:
policy 1: forwarding, via the task forwarding function network element, data that is of the first task and that needs to be sent by the first terminal device to a task processing function network element;
policy 2: forwarding, via the task forwarding function network element or the second access network device, data that is of the first task and that needs to be sent by the first terminal device to a second terminal device, wherein the second terminal device is served by the second access network device;
policy 3: sending, through an air interface, data that is of the first task and that needs to be sent by the first terminal device to a third terminal device, wherein the third terminal device is served by the first access network device; and
policy 4: sending, through an air interface, data that is of the first task and that needs to be sent to the first terminal device.

21. The system according to any one of claims 17 to 20, wherein the task control function network element is further configured to send second policy information to the second access network device, wherein the second policy information indicates to forward, via the task forwarding function network element or the first access network device, data that is of the first task and that needs to be sent by the second terminal device to the first terminal device, and the second terminal device is served by the second access network device.

22. The system according to any one of claims 17 to 21, wherein the task control function network element is further configured to send third policy information to the task forwarding function network element, wherein the third policy information indicates to forward, via the first access network device, data that is of the first task and that needs to be sent to the first terminal device.

23. A computer program product, wherein the computer program product comprises a computer program or instructions; and when the computer program or the instructions are run on a processor, the processor is caused to perform the method according to any one of claims 1 to 6 or the method according to claim 7 or 8.

24. A computer-readable storage medium, wherein the storage medium stores a computer program or instructions, and when the computer program or the instructions are executed by a communication apparatus, the method according to any one of claims 1 to 6 or the method according to claim 7 or 8 is implemented.
